# EUROPÄISCHE PATENTANMELDUNG

(11) **EP 1 375 258 A1**
(43) Veröffentlichungstag der Anmeldung: **02.01.2004**
(21) Anmeldenummer: 03009665.5
(22) Anmeldetag: 30.04.2003
(51) Int. Cl.: B60R 16/02

(54) **Vorrichtung zur individuellen Einstellung von Fahrzeugkomponenten**

(30) Priorität: 29.06.2002 DE 10230279
(71) Anmelder: Bayerische Motoren Werke Aktiengesellschaft, 80809 München (DE)
(72) Erfinder: Luthe, Christoph, 80809 München (DE)

(57) **Zusammenfassung**

Eine Vorrichtung zur individuellen Einstellung von Fahrzeugkomponenten, die als mobile Einheit ausgebildet ist umfasst einen Datenspeicher für Daten, die mit Fahrzeugkomponenten zugeordneten Fahrzeugparametern korreliert sind, einen Empfänger für ein von einem Fahrzeug ausgesandtes Sendebefehlssignal und einen durch das Sendebefehlssignal aktivierten Sender zum Übertragen zumindest eines Teils der im Speicher enthaltenen Daten zum Fahrzeug. Die Vorrichtung enthält zusätzlich einen Sprachspeicher für mehrere Sprachbefehle und den Sprachbefehlen zugeordnete Steuerbefehle für eine Fahrzeugtelefonvorrichtung. Sprach- und zugehörige Steuerbefehle werden auf das Sendebefehlssignal hin ebenfalls von der Vorrichtung zu einem fahrzeugseitigen Empfänger übertragen und im Fahrzeug gespeichert.

## Beschreibung

Die Erfindung bezieht sich auf eine Vorrichtung zur individuellen Einstellung von Fahrzeugkomponenten, die als mobile Einheit ausgebildet ist und die im Oberbegriff des Patentanspruchs 1 angegebenen Merkmale umfasst.

Bei den üblichen Vorrichtungen zur individuellen Einstellung von Fahrzeugparametern für Fahrzeugkomponenten, wie beispielsweise Sitzposition, Spiegeleinstellungen, Radiosender oder Temperatur, werden die Fahrzeugparameter in einer im Fahrzeug angeordneten Speichereinheit abgelegt. Wird das Fahrzeug von mehreren Fahrern benutzt, stehen inzwischen komfortable Verfahren zur individuellen Einstellung von Fahrzeugkomponenten zur Verfügung. Beispielsweise werden beim Entriegeln des Fahrzeuges die für den jeweiligen Fahrzeugbenutzer im Fahrzeug gespeicherten Fahrzeugparameter abgerufen und automatisch eingestellt. Die Identifizierung des Fahrzeugbenutzers erfolgt auf Grund des ihm zugeordneten Fahrzeug-(fernbedienungs-)schlüssels.

Nachteilig an allen bekannten Systemen ist, dass die individuellen Fahrzeugparameter nur an ein bestimmtes Fahrzeug übertragen werden können. Wechselt man jedoch sein Fahrzeug - beispielsweise im Rahmen eines Fuhrparks, durch Benutzung eines Mietwagen, oder auch durch den Verkauf des Altwagens - wäre es wünschenswert, seine individuellen Fahrzeugeinstellungen auf beliebig viele unterschiedliche Fahrzeuge zu übertragen.

Ein weiterer Nachteil bekannter Vorrichtungen besteht darin, dass sie nur die individuelle Einstellung von Fahrzeugkomponenten wie o.g. Sitze, Spiegel, Radio und Heiz- und Klimaanlagen erlauben. Da zunehmend Fahrzeugtelefonvorrichtungen zum Einsatz kommen, deren individuelle Steuerbefehle (z.B. das Herstellen einer Wahlverbindung durch Aussprechen der gewünschten Rufnummer) gesprochen aufgegeben werden, macht der Wechsel des Fahrzeugs jeweils ein erneutes Aufsprechen dieser Steuerbefehle erforderlich. Da dies in der Regel umständlich ist, ergibt sich daraus ein Akzeptanzproblem bis hin zur Verärgerung des Fahrzeugbenutzers.

Aufgabe der vorliegenden Erfindung ist es deshalb, eine Vorrichtung der eingangs genannten Art bereitzustellen, welches die angesprochenen Nachteile vermeidet.

Diese Aufgabe wird erfindungsgemäß durch eine Vorrichtung mit den Merkmalen von Patentanspruch 1 gelöst.

Der Erfindung basiert auf der Erkenntnis, dass die Daten für die Fahrzeugparameter in einer mit einer Sende-, Empfangs-, und Speichereinheit ausgestatteten Vorrichtung zusammen mit den Sprachbefehlen zugeordneten Steuerbefehlen für eine Fahrzeugtelefonvorrichtung gespeichert werden. Die Daten der Fahrzeugparameter, die Sprach und die zugehörigen Steuerbefehle werden gemeinsam auf das Sendebefehlssignal hin von der Vorrichtung zu einem fahrzeugseitigen Empfänger übertragen und im Fahrzeug gespeichert. Die Vorrichtung ist einer bestimmten Person zugeordnet, aber fahrzeugunabhängig ausgebildet.

Der Vorteil an der Erfindung liegt darin, dass die Sende-, Empfangs- und Speichereinheit in einen nicht zum Fahrzeug gehörenden, aber von einer Person meist bei sich getragenen Gegenstand integriert werden kann. In dieser mobilen Sende-, Empfangs- und Speichereinheit werden nun die Daten der Fahrzeugparameter sowie die Sprach- und zugeordnete Steuerbefehle gespeichert. Benutzt beispielsweise eine Person, welche mit der erfindungsgemäßen Vorrichtung ausgestattet ist, einen Mietwagen, so können ihre Fahrzeugparameter sowie ihre individuellen Sprach- und zugeordnete Steuerbefehle auch an den Mietwagen übertragen und in individuelle Einstellungen der Komponenten und der Telefoneinrichtung umgesetzt werden.

Eine Vereinfachung der Vorrichtung ergibt sich, wenn der Sprachspeicher die Sprachbefehle digitalisiert enthält. Der Sprachspeicher kann dann einfacher Weise als Bestandteil des Datenspeichers realisiert werden.

Ist schließlich die Vorrichtung in einem bestimmten Fahrer zugeordneten Gegenstand, insbesondere in eine Uhr, in ein Mobiltelefon, in einen Handcomputer (sog. PDA), in eine Geldbörse, in einen Führerschein oder in einen Personalausweis, integriert, ergibt sich eine weitere Steigerung des Gebrauchsnutzens. Die Vorrichtung kann praktisch nicht mehr vergessen werden. Der Fahrzeugbenutzer hat stets ein Fahrzeug zur Verfügung, das seinen individuellen Bedürfnissen entspricht.

## Patentansprüche

1. Vorrichtung zur individuellen Einstellung von Fahrzeugkomponenten, die als mobile Einheit ausgebildet ist und die umfasst:
einen Datenspeicher für Daten, die mit Fahrzeugkomponenten zugeordneten Fahrzeugparametern korreliert sind,
einen Empfänger für ein von einem Fahrzeug ausgesandtes Sendebefehlssignal und
einen durch das Sendebefehlssignal aktivierten Sender zum Übertragen zumindest eines Teils der im Speicher enthaltenen Daten zum Fahrzeug,
**dadurch gekennzeichnet,**
**dass** die Vorrichtung zusätzlich einen Sprachspeicher für mehrere Sprachbefehle und den Sprachbefehlen zugeordnete Steuerbefehle für eine Fahrzeugtelefonvorrichtung enthält,
und **dass** Sprach- und zugehörige Steuerbefehle auf das Sendebefehlssignal hin ebenfalls von der Vorrichtung zu einem fahrzeugseitigen Empfänger übertragen und im Fahrzeug gespeichert werden.

2. Vorrichtung nach Anspruch 1, **dadurch gekennzeichnet, dass** der Sprachspeicher die Sprachbefehle digitalisiert enthält.

3. Vorrichtung nach Anspruch 2, **dadurch gekennzeichnet, dass** der Sprachspeicher Bestandteil des Datenspeichers ist.

4. Vorrichtung nach einem der vorhergehenden Ansprüche, **dadurch gekennzeichnet, dass** die Vorrichtung in einem bestimmten Fahrer zugeordneten Gegenstand, insbesondere in eine Uhr, in ein Mobiltelefon, in einen Handcomputer, in eine Geldbörse, in einen Führerschein oder in einen Personalausweis, integriert ist.
